# EUROPEAN PATENT SPECIFICATION

(11) **EP 2 264 564 B1**
(45) Date of publication and mention of the grant of the patent: **12.11.2014**
(21) Application number: 10165654.4
(22) Date of filing: 11.06.2010
(51) Int. Cl.: G06F 3/033, G06F 3/048

(54) **Vehicle commander control switch and method**
Steuerungsschalter und -verfahren für Fahrzeugführer
Commutateur et procédé de contrôle de commande de véhicule

(30) Priority: 12.06.2009 US 483928
(43) Date of publication of application: 22.12.2010
(73) Proprietor: Honda Motor Co., Ltd., Tokyo 107-8556 (JP)
(72) Inventor: Choi, Dave, Raymond, OH 43067-9705 (US)
(74) Representative: Beder, Jens

(56) References cited:
- EP-A1- 1 870 800
- WO-A1-2010/000281
- US-A1- 2007 120 830
- US-A1- 2007 263 014

## Description

### BACKGROUND

The present disclosure relates to a commander control switch, system and method for a vehicle, such as the type used in association with a display device.

Some vehicle display systems employ touch screens; however, interacting with a touch screen can cause a driver to take his or her eyes off the road for too long. To improve safety, the display can be provided with an operating member or a multi-position switch configured to move a cursor on the display screen and/or make a selection among a plurality of processing items or menus displayed on the display screen. Some such operating members are displaceable in an axial direction and/or rotatable around the axial direction. Selection can be made among the various processing items on the display screen in accordance with an inputting operation by the operating member. Some vehicle display systems employ a combination including an interactive touch screen and an operating member or multi-position switch.

Interactive touch screens in vehicles are common, but still continue to be somewhat difficult to design and use since the display visibility is sometimes compromised (e.g., a hooded screen cannot be used), placement is limited (e.g., the display must be in reach of the driver), and the sensitivity of the touch screen is sometimes an issue (e.g., not sensitive enough or too sensitive). In addition, the large majority of vehicle touch screens are flat, which can create an ergonomic concern. Size can also be an issue, particularly since the users often have to constantly swipe the surface to scroll around a large map when used in association with a vehicle navigation system.

Patent Application US 2007120830 (A1) discloses a device that comprises a rotatably supported touchpad, especially on the steering wheel of a motor vehicle, means for measuring an angle of rotation of the touchpad in relation to a reference system, and means for processing inputs into the touchpad taking into consideration the measured angle of rotation. Patent Application EP 1870800 (A1) discloses a touchpad in which a user input is received includes at least first through third zones, with the first zone and the third zone being non-adjacent. The touchpad further includes at least first and second non-overlapping sensors, with the first sensor disposed in at least a portion of the first and the second zones and configured to transmit a first electrical signal in response to a user input, and the second sensor disposed in at least a portion of the first and the third zones and configured to transmit a second electrical signal in response to a user input. Moreover, the touchpad includes a controller configured to generate first information in response to receiving the first electrical signal but not the second electrical signal, second information in response to receiving both the first electrical signal and the second electrical signal, and third information in response to receiving the second electrical signal but not the first electrical signal. The first information, the second information, and/or the third information are output.

Patent Application DE10304720 (A1) discloses a vehicle commander control switch having a rotary knob with a touch pad thereon used for scrolling. Patent Applications US2007/0159452 (A1), US2004/0132498 (A1) and FR2847527 (A1) all disclose vehicle commander control switches having rotary knobs and touch pads thereon.

### BRIEF DESCRIPTION

According to one aspect, a vehicle commander control switch includes a touch pad having a touch surface for receiving touch input thereon. The touch surface has a first inner zone and a second outer zone disposed outwardly relative to the first inner zone. The control switch also includes a touch pad signal generator for detecting the location of the touch input on the touch surface and generating signals corresponding thereto. The touch pad signal generator has a scroll mode wherein the touch pad signal generator generates a scroll command signal when the touch input is on the second zone that corresponds to a location of the touch input on the second outer zone.

According to another aspect, a commander control switch system is provided for a vehicle. More particularly, in accordance with this aspect, the system includes a touch pad having a touch surface for receiving touch input thereon. The touch surface includes a first central zone and a second zone annularly surrounding the first central zone. The system also includes a touch pad signal generator for detecting the location of the touch input on the touch surface and generating signals corresponding thereto. In addition, the system includes a control unit and a display device for displaying display content. The control unit is operatively connected to the touch signal generator for receiving the signals therefrom, and is also operatively connected to the display device for controlling the display content on the display device. The control unit scrolls the display content on the display device when the touch pad signal generator detects the touch input in the second zone and sends the signals to the control unit corresponding to the touch input in the second zone.

According to still another aspect, a commander control switch method includes providing a touch pad having a touch surface including a first central zone and a second zone annularly surrounding the first central zone, generating scroll command signals when touch input is received on the second zone of the touch pad, receiving the scroll command signals from the touch pad, displaying display content on a display, and scrolling the display content on the display when the scroll command signals are received.

### BRIEF DESCRIPTION OF THE DRAWINGS

FIG. 1 is a perspective view of a vehicle commander control switch.
FIG. 2 is a top plan view of the vehicle commander switch of FIG. 1.
FIG. 3 is a cross section of the vehicle commander control switch taken along the line 3-3 of FIG. 1.
FIG. 4 is a schematic view of a commander control switch system for a vehicle, including the vehicle commander control switch of FIGS. 1-3.
FIG. 5 is a flow diagram of a commander control switch method.

### DETAILED DESCRIPTION

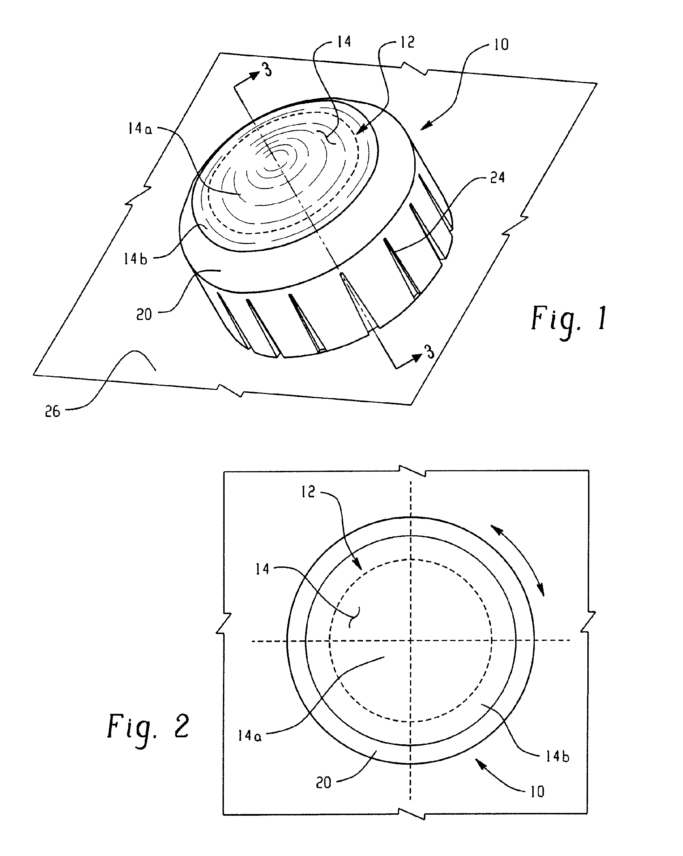

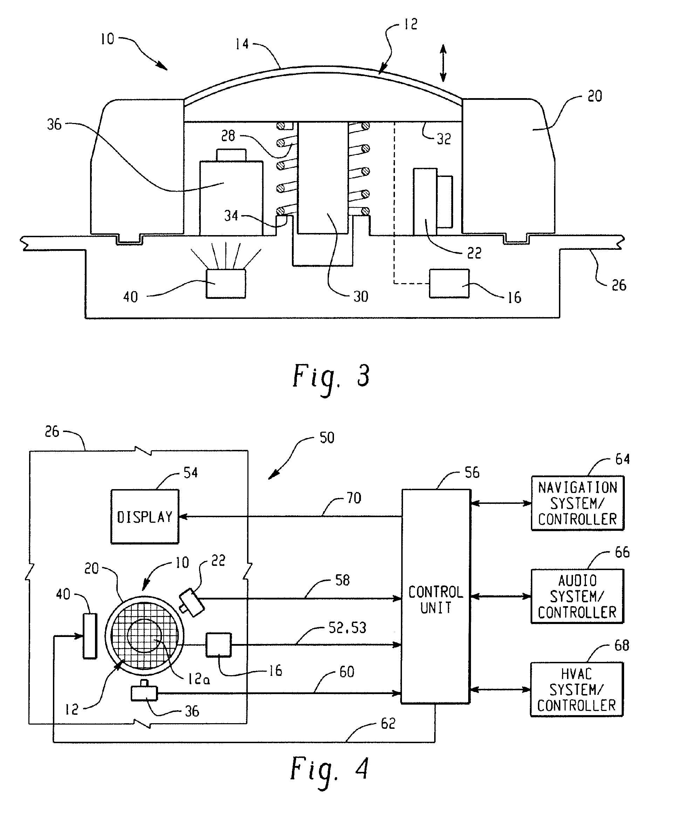

Referring now the drawings, wherein the showings are only for purposes of illustrating one or more exemplary embodiments and not for purposes of limiting same, FIGS. 1 and 2 schematically illustrate a vehicle commander control switch, which is generally designated by reference numeral 10. The control switch 10 includes a touch pad 12 having a touch surface 14 for receiving touch input thereon. In one embodiment, the touch pad 12 can include capacitance sensors 12a for determining where touch input occurs on the touch surface 14. The touch surface 14 has a first inner or central zone 14a and a second outer zone 14b disposed outward relative to the first inner zone 14a. With additional reference to FIG. 3, the vehicle commander control switch 10 further includes a touch pad signal generator 16 for detecting the location of the touch input on the touch surface 14 and generating signals corresponding thereto. As will be described in more detail below, the touch pad signal generator 16 has a scroll mode wherein the touch pad signal generator 16 generates a scroll command signal (e.g., scroll command signal 52 of FIG. 4), when the touch input is on the second outer zone 14b, which corresponds to a location of the touch input on the second outer zone 14b. Of particular advantage, the touch pad signal generator 16 can continuously generate the scroll command signal while touch input is on the second outer zone 14b.

As shown in the illustrated embodiment, the touch surface 14 can be a continuous surface across and between the first and second zones 14a and 14b. That is, there are no physical or tactile delineations at the boundary between the first and second zones 14a, 14b on the touch surface 14 (e.g., no ridges, grooves, depressions, etc.). Accordingly, as best shown in FIG. 3, the touch surface 14 can be smooth without interruptions across its entire diameter. While surface 14 is continuous across the zones 14a,14b, the zones can be distinguished from one another through other means. For example, the zones 14a,14b could vary in color, texture, material composition, etc. Also, different backlighting could be applied to the zones 14a,14b. In addition, the touch surface 14 can be generally round and convex (as shown in the illustrated embodiment), though this is not required. When the touch surface 14 is round, as shown in the illustrated embodiment, the first zone 14a can have a generally circular configuration and a second zone 14b can have a generally annular configuration that annularly surrounds the first zone 14a.

Of course, other configurations are contemplated. For example, the touch surface 14 could have a square or rectangular configuration (not shown) wherein the inner zone 14a has a square or rectangular configuration with the outer zone 14b having a corresponding square or rectangular configuration surrounding the inner zone. Alternatively, one or both of these zones 14a, 14b can be broken up. In one such example (not shown), the outer zone 14b includes four separated areas, such as a first area provided above the inner zone 14a, a second area provided to the right of the area 14a, a third zone provided below area 14a and a fourth zone provided to the left of area 14a (all directions relative to the plan view of FIG. 2). These separated areas could still be continuous with zone 14a, but can be separated relative to one another.

The vehicle commander control switch 10 can further include an annular rotary knob 20 disposed annularly around the touch pad 12 and rotatably movable relative thereto. As shown, the touch pad 14 can be disposed radially within the rotary knob 20. In association with the rotary knob 20, the switch 10 can also include a rotational signal generator 22 disposed on or adjacent the rotary knob 20 for detecting relative rotation of the rotary knob 20 and generating rotational signals (e.g., rotational signals 58 in FIG. 4) corresponding thereto. As shown in FIG. 1, the rotary knob 20 can include indentations or recesses 24 to facilitate gripping of the rotary knob 20 when rotation thereof is desired.

The vehicle commander control switch 10 can also include a vehicle support structure 26 on or in which the touch pad 12 can be mounted. The vehicle support structure 26 could be, for example, the dashboard or console area of a vehicle, or some other area. In the illustrated embodiment, the touch pad 12 is displaceable relative to the support structure 26 between a first position (e.g., a rest position) and a second depressed position. A bias mechanism, such as coil spring 28, can be connected to the support structure 26 to urge the touch pad 12 toward the first position. For example, in the schematically illustrated embodiment of FIG. 3, the coil spring 28 is received annularly around touch pad stem portion 30 and disposed axially between an underside 32 of the touch pad 12 and shoulder portion 34 of the support structure 26. Of course, other configurations and bias mechanisms can be used for urging the touch pad 12 toward its first rest position. The touch pad movement signal generator 36 can be provided for detecting depression of the touch pad 12 when the touch pad 12 is moved to the second position and generating a depression signal (e.g., depression signal 36 of FIG. 4) corresponding thereto.

The vehicle commander control switch 10 can also include backlighting 40 for illuminating the touch pad 12 and/or the rotary knob 20. The backlighting 40, which is illustrated schematically in FIG. 3, can include a plurality of colors with each of the plurality of colors corresponding to one of a plurality of system modes of the touch pad 12 such that the touch pad 12 is illuminated with a particular color that corresponds to a particular system mode of the touch pad. For example, the plurality of system modes can include two or more of a navigation mode, an audio mode and an HVAC mode, and could include additional or other modes. Each of the plurality of colors could correspond to these modes. For example, the backlighting could apply red illumination for the navigation mode, amber illumination for the audio mode and/or green illumination for the HVAC mode.

With reference to FIG. 4, a commander control switch system 50 is schematically illustrated for a vehicle. A system 50 includes a vehicle commander control switch, such as switch 10 of FIGS. 1-3, which includes touch pad 12 having touch surface 14 for receiving touch input thereon. The system 50 additionally includes a touch pad signal generator, such as touch pad signal generator 16 of FIG. 3, for detecting the location of touch input on the touch surface and generating signals 52 corresponding to such touch input. As shown, the system 50 further includes a display device 54 for displaying display content and a control unit 56 for controlling communications and operations of the system 50. Though not illustrated, the control unit 56 can include an input/output interface for communicating with the signal generators 16, 22, 36, the backlighting 40, and/or the display device 54. In addition, the control unit 56 can include a CPU and a memory. The display device 54 and the control unit 56 are operatively connected to one another, and particularly the control unit 56 is operatively connected to the display device 54 for controlling the display content on the display device 54.

The control unit 56 is also operatively connected to the touch signal generator 16 for receiving the signals 52 therefrom. As will be described in more detail below, the control unit 56 scrolls the display content on the display device 54 when the touch pad signal generator 16 detects touch input in the second zone 14b and sends the signals 52 to the control unit 56 corresponding to the touch input in the second zone 14b. The display device 54 can be mounted in the same vehicle support structure 26 as is the commander control switch 10, though this is not required (e.g., display 54 could be mounted in a dashboard portion of the vehicle and the commander switch 10 could be separately mounted in a console portion of the vehicle).

As shown, the control unit 56 can be operatively connected to the rotational signal generator 22 for receiving rotational signals 58 therefrom. Accordingly, the rotational signal generator 22 detects relative rotation of the rotary knob 20 (e.g., relative to the touch pad 12 and/or the vehicle support structure 26) and generates rotational signals 58 corresponding thereto. These signals 58 are sent to and received by the control unit 56. The control unit 56 can also be operatively connected to the touch pad movement signal generator 36 for receiving movement signals 60 therefrom. Accordingly, when the touch pad 12 is axially displaced from the first position to the second position overcoming the urging of the bias mechanism (e.g., spring 28), and the touch pad movement signal generator 36 detects such movement of the touch pad 12 into the second position and generates the corresponding movement signal 60, such signal is sent to and received by the control unit 56.

Still further, the control unit 56 can be operatively connected to the backlighting 40 for the touch pad 12 and/or the rotary knob 20. As already indicated herein, the backlighting 40 can include a plurality of colors (e.g., at least a first color and a second color). The backlighting 40 can be controlled by the control unit (e.g., backlighting command signal 62) such that in one example the backlighting 40 illuminates the touch pad 12 in a first color when the touch pad 12 is operated in a first mode (e.g., navigation mode) and illuminate the touch pad in a second color when the touch pad 12 is operated in a second mode (e.g., audio or HVAC mode). Additional colors can be used for additional modes if desired.

The control unit 56 can additionally be operatively connected to one or more of a navigation system or controller 64, an audio system or controller 66, and an HVAC system or controller 68. Alternatively, the control unit 56 can be one of the controllers of the navigation system, audio system or HVAC systems. While in the illustrated embodiment, the control unit 56 is shown as being operatively connected to each of the navigation system or controller 64, the audio system or controller 66 and the HVAC system or controller 68, it is to be appreciated and understood by those skilled in the art that fewer systems/controllers could be employed or additional systems/controllers could be employed.

In an exemplary embodiment, input from the commander control switch 10 corresponds to a particular system (e.g., system 64, 66, or 68) depending on a mode in which the control unit 56 is in. For example, the control unit 56 can have a navigation mode wherein input from the commander control switch 10, including touch input from the touch pad 12, operates the vehicle navigation system 64. In this exemplary embodiment, the touch pad signal generator 16 can be in the scroll mode when the control unit 56 is in the navigation mode such that the touch pad signal generator 16 generates the signal 52 as a scroll command signal when touch input is on the second outer zone 14b, and wherein the scroll command signal corresponds to a location of a touch input on the second outer zone 14b. The touch pad generator signal 16 can generate gesture command signals 53 when the touch input on the touch pad 12 is in the first inner zone 14a. These gesture command signals 52 are received by the control unit 56.

In one example, the display device 54 displays a map when the control unit 56 is in the navigation mode. In this example, the scroll command signal 52 is generated by the touch pad signal generator 16 when the touch input is on the second outer zone 14b with the control unit 56 in navigation mode and the touch pad signal generator is in the scroll mode. Accordingly, the control unit 56 scrolls the map on the display device 54 via display command signal or signals 70. In particular, the control unit 56 scrolls the map on the display device 54 continuously while the scroll command signal 52 is received (i.e., scrolling occurs continuously while touch input continues on the second zone 14b). The control unit 56 also reconfigures the map on the display device 54 based on the gesture command signals 53, which are received from the signal generator 16 when touch input is on the first zone 14a.

The gesture command signals 53 can include zoom gesture command signals, such as zoom in and zoom out commands. For example, the user can place two fingers on the first central zone 14a and spread those fingers apart to zoom the map of the display device 54 out or can move the two fingers toward one another to zoom in on the map. When the touch input is on the second zone 14b and scrolling of the map on the display device 54 occurs, a direction along which the map is scrolled can correspond to a location of a touch input upon the second outer zone 14b. For example, when a top portion (relative to FIG. 2) of the second zone 14b is touched, the map on the display device 54 can be scrolled upwardly. Accordingly, a direction of scrolling of the display content on the display device 54 by the control unit 56 can correspond to a location of the touch input in the second zone 14b. Advantageously, control unit 56 continuously scrolls the display content on the display device 54 while the touch pad signal generator 16 continuously detects touch input in the second zone 14b and continuously sends signals (e.g., signals 52) to the control unit 56 corresponding to the touch input in the second zone 14b.

The first central zone 14a can also be used for conventional dragging of the map on the display 54. For example, a user can place a single finger within the first zone 14a and drag that finger to another location in the zone 14a to drag the map, wherein a direction of the dragging of the map will correspond to a direction of dragging across the first zone 14a. In contrast, touching the second zone 14b allows auto-scrolling of the map on the display device 54. Auto-scrolling eliminates or reduces the constant swiping motion required by users of most current systems and creates an easier to use and more ergonomic platform. A selection or enter function can correspond to the touch pad 12 being moved to the second position, wherein the movement detector 36 relays signal 60 to the control unit 56. Alternatively, movement of the touch pad 12 and detection thereof by signal generator 36 can be replaced by input being received through the touch surface 12, such as by a tap on the touch surface 12.

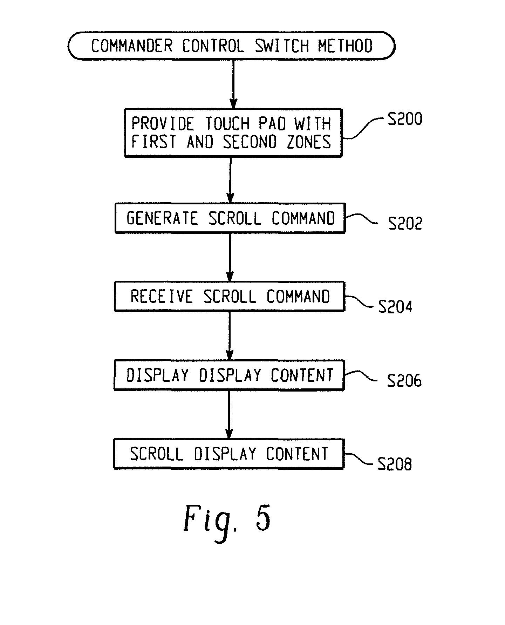

With reference now to FIG. 5, a commander control switch method will be described. The method of FIG. 5 can be applied to the system 50 of FIG. 4. In the method, the touch pad, such as touch pad 12 having a touch surface 14 including first central zone 14a and second zone 14b annularly surrounding the first central zone 14a, can be provided (S200). Scroll command signals, such as signals 52, can be generated when touch input is received on the second zone 14b of the touch pad 12 (S202). The scroll command signals 52 can be received by the control unit 56 from the touch pad 12 (S204). Display content can be displayed on a display device 54 as commanded by the control unit 56 (S206). The display content on the display device 54 can be scrolled when the scroll command signals 52 are received by the control unit 56 (S208), wherein the scroll command signals 52 corresponding to touch input on the second zone 14b.

It is to be appreciated that in connection with the particular exemplary embodiments presented herein, certain structural and/or functional features are described as being incorporated in defined elements and/or components. However, it is calculated that these features, to the same or similar benefit, also may likewise be incorporated in common elements and/or components or separated, where appropriate. For example, the controller 56 could be distributed throughout the system 50.

It is also to be appreciated that different aspects of the exemplary embodiments may be selectively employed as appropriate to achieve other alternative embodiments suited for the desired applications, the other alternate embodiments thereby realizing the respective advantages of the aspects incorporated herein. It is also to be appreciated that particular elements or components described herein may have their functionality suitably implemented via hardware, software, firmware, or in combination. Additionally, it is to be appreciated that certain elements described herein as incorporated together may under suitable circumstances be stand-alone elements or otherwise divided. Similarly, a plurality of particular functions described as being carried out by one particular element may be carried out by a plurality of distinct elements acting independently to carry out individual functions, or certain individual functions may be split-up and carried out by a plurality of distinct elements acting in concert. Alternately, some elements or components otherwise described and/or shown herein are distinct from one another may be physically or functionally combined where appropriate. For example, the navigational system or controller 64 could be combined with the control unit 56.

## Claims

1. A vehicle commander control switch, comprising a touch pad (12) having a touch surface (14) for receiving touch input thereon, said touch surface (14) having a first inner zone (14a) and a second outer zone (14b) disposed outwardly relative to said first inner zone (14a); and
a touch pad signal generator (16) for detecting the location of said touch input on said touch surface (14) and generating signals corresponding thereto, said touch pad signal generator (16) having a scroll mode and a rotary knob (20) is disposed around said touch pad (12) and rotatably movable relative thereto; and a rotational signal generator (22) disposed on or adjacent said rotary knob (20) for detecting relative rotation of said rotary knob (20) and generating rotational signals corresponding thereto,
**characterized in that**
said touch pad signal generator (16) generates a scroll command signal, when said touch input is on said second outer zone (14b), that corresponds to a location of said touch input on said second outer zone (14b), and
said first zone (14a) has a circular configuration and said second zone (14b) has a annular configuration that surrounds said first zone (14a);
wherein when said location of the second outer zone (14b) is continuously touched, the touch pad signal generator (16) continuously generates scroll command signals corresponding to the touch input.

2. The vehicle commander control switch of claim 1 wherein said touch surface (14) is a continuous surface across and between said first and second zones (14a, 14b).

3. The vehicle commander control switch of claim 1 or 2 wherein said touch surface (14) is round and convex.

4. The vehicle commander control switch of any of claims 1 to 3 wherein said first and second zones (14a, 14b) are distinguished from one another by having at least one of: varying colors, varying textures and varying backlighting.

5. The vehicle commander control switch of any of claims 1 to 4 wherein said touch pad signal generator (16) continuously generates said scroll command signal while said touch input is on said second outer zone (14b).

6. The vehicle commander control switch of any of claims 1 to 5 further including a vehicle support structure (26) on or in which said touch pad (12) is mounted, said touch pad (12) displaceable relative to said support structure (26) between a first position and a second depressed position;
a bias mechanism (28) connected to said support structure to urge said touch pad (12) toward said first position; and
a touch pad movement signal generator (36) for detecting depression of said touch pad (12) when said touch pad (12) is moved to said second position and generating a depression signal corresponding thereto.

7. The vehicle commander control switch of any of claims 1 to 6 further including backlighting (40) for illuminating said touch pad (12), said backlighting (40) including a plurality of colors with each of said plurality of colors corresponding to one of a plurality of system modes of said touch pad (12) such that said touch pad (12) is illuminated with a particular color that corresponds to a particular system mode of said touch pad.

8. The vehicle commander control switch of any of claims 1 to 7 further including a control unit (56) operatively connected to said touch signal generator (16) for receiving said signals therefrom, said control unit (56) having a navigation mode wherein said touch input from said touch pad (12) operates a vehicle navigation system, said touch pad signal generator (16) in said scroll mode when said control unit (56) is in said navigation mode; and
a display device (54) operatively connected to said control unit (56), said display device (54) displaying a map when said control unit (56) is in said navigation mode,
wherein said scroll command signal is generated by said touch pad signal generator (16) when said touch input is on said second outer zone (14b) with said control unit (56) in said navigation mode and said touch pad signal generator (16) in said scroll mode and said control unit (56) scrolling said map on said display device (54) continuously while said scroll command signal is received.

9. The vehicle commander control switch of claim 8 wherein said touch pad signal generator (16) generates gesture command signals when said touch input is on said first inner zone (14a) and said control unit (56) receives said gesture command signals, said control unit (56) reconfiguring said map on said display device (54) based on said gesture command signals.

10. The vehicle commander control switch of claim 9 wherein said gesture command signals include zoom gesture command signals.

11. The vehicle commander control switch of any of claims 8 to 10 wherein a direction along which said map is scrolled corresponds to said location of said touch input on said second outer zone (14b).

12. A commander control switch method, comprising providing a touch pad (12) having a touch surface (14); generating scroll command signals when touch input is received on said second zone (14b) of said touch pad (12);
receiving said scroll command signals from said touch pad (12);
displaying display content on a display device (54); and
scrolling said display content on said display device (54) when said scroll command signals are received,
and providing
a rotary knob (20) around said touch pad (12) being rotatably movable relative thereto; and providing a rotational signal generator (22) that is disposed on or adjacent said rotary knob (20); detecting relative rotation of said rotary knob (20) and generating rotational signals corresponding thereto
**characterized in that**
said touch surface (14) has a first central zone (14a) and a second zone (14b) annularly surrounding the first central zone (14a) wherein said first zone (14a) has a circular configuration and said second zone (14b) has an annular configuration that surrounds said first zone (14a);
and when a location of the second outer zone (14b) is continuously touched, the touch pad signal generator (16) continuously generates scroll command signals corresponding to the touch input.

## Patentansprüche

1. Steuerungsschalter für Fahrzeugführer, der aufweist: ein integriertes Berührungsfeld (12) mit einer Berührungsoberfläche (14) zum Empfangen von Berührungseingaben darauf, wobei die Berührungsoberfläche (14) eine erste Innenzone (14a) und eine zweite Außenzone (14b), die relativ zu der ersten Innenzone (14a) auswärts angeordnet ist, hat; und
einen Berührungsfeld-Signalgenerator (16) zum Erfassen der Stelle der Berührungseingabe auf der Berührungsoberfläche (14), der dementsprechende Signale erzeugt, wobei der Berührungsfeld-Signalgenerator (16) eine Anzeigeverschiebungsbetriebsart hat, und ein Drehknopf (20) um das Berührungsfeld (12) herum angeordnet ist und relativ dazu drehbar beweglich ist; und einen Drehsignalgenerator (22), der auf oder benachbart zu dem Drehknopf (20) angeordnet ist, um die relative Drehung des Drehknopfs (20) zu erfassen und dementsprechende Drehsignale zu erzeugen,
**dadurch gekennzeichnet, dass**
der Berührungsfeld-Signalgenerator (16) ein Anzeigeverschiebungsbefehlssignal erzeugt, wenn die Berührungseingabe auf der zweiten Außenzone (14b) erfolgt, das einer Stelle der Berührungseingabe auf der zweiten Außenzone (14b) entspricht, und die erste Zone (14a) einen kreisförmigen Aufbau hat und die zweite Zone (14b) einen ringförmigen Aufbau hat, der die erste Zone (14a) umgibt;
wobei der Berührungsfeld-Signalgenerator (16) kontinuierlich Anzeigeverschiebungsbefehlssignale erzeugt, die der Berührungseingabe entsprechen, wenn die Stelle der zweiten Außenzone (14b) kontinuierlich berührt wird.

2. Steuerungsschalter für Fahrzeugführer nach Anspruch 1, wobei die Berührungsoberfläche (14) eine kontinuierliche Oberfläche quer über und zwischen den ersten und zweiten Zonen (14a, 14b) ist.

3. Steuerungsschalter für Fahrzeugführer nach Anspruch 1 oder 2, wobei die Berührungsoberfläche (14) rund und konvex ist.

4. Steuerungsschalter für Fahrzeugführer nach einem der Ansprüche 1 bis 3, wobei die ersten und zweiten Zonen (14a, 14b) sich voneinander unterscheiden, indem sie wenigstens eines der Folgenden haben: variierende Farben, variierende Texturen und variierende Hintergrundbeleuchtung.

5. Steuerungsschalter für Fahrzeugführer nach einem der Ansprüche 1 bis 4, wobei der Berührungsfeld-Signalgenerator (16) das Anzeigeverschiebungsbefehlssignal kontinuierlich erzeugt, während die Berührungseingabe auf der zweiten Außenzone (14b) erfolgt.

6. Steuerungsschalter für Fahrzeugführer nach einem der Ansprüche 1 bis 5, der ferner umfasst: eine Fahrzeughaltestruktur (26), auf oder in der das Berührungsfeld (12) montiert ist, wobei das Berührungsfeld (12) relativ zu der Haltestruktur (26) zwischen einer ersten Position und einer zweiten vertieften Position verschiebbar ist;
einen Vorspannmechanismus (28), der mit der Haltestruktur verbunden ist, um das Berührungsfeld (12) in Richtung der ersten Position zu drängen; und
einen Berührungsfeld-Bewegungssignalgenerator (36) zum Erfassen der Vertiefung des Berührungsfelds (12), wenn das Berührungsfeld (12) in die zweite Position bewegt wird, und zum Erzeugen eines dementsprechenden Vertiefungssignals.

7. Steuerungsschalter für Fahrzeugführer nach einem der Ansprüche 1 bis 6, das ferner eine Hintergrundbeleuchtung (40) zum Erleuchten des Berührungsfelds (12) umfasst, wobei die Hintergrundbeleuchtung (40) mehrere Farben umfasst, wobei jede der mehreren Farben einer von mehreren Systembetriebsarten des Berührungsfelds (12) entspricht, so dass das Berührungsfeld (12) mit einer bestimmten Farbe erleuchtet wird, die einer bestimmten Systembetriebsart des Berührungsfelds entspricht.

8. Steuerungsschalter für Fahrzeugführer nach einem der Ansprüche 1 bis 7, der ferner umfasst: eine Steuereinheit (56), die betriebsfähig mit dem Berührungsfeld-Signalgenerator (16) verbunden ist, um die Signale von diesem zu empfangen, wobei die Steuereinheit (56) eine Navigationsbetriebsart hat, in der die Berührungseingabe von dem Berührungsfeld (12) ein Fahrzeugnavigationssystem betreibt, wobei der Berührungsfeld-Signalgenerator (16) in der Anzeigeverschiebungsbetriebsart ist, wenn die Steuereinheit (56) in der Navigationsbetriebsart ist; und
eine Anzeigevorrichtung (56), die betriebsfähig mit der Steuereinheit (56) verbunden ist, wobei die Anzeigevorrichtung (54) eine Karte anzeigt, wenn die Steuereinheit (56) in der Navigationsbetriebsart ist,
wobei das Anzeigeverschiebungsbefehlssignal von dem Berührungsfeld-Signalgenerator (16) erzeugt wird, wenn die Berührungseingabe auf der zweiten Außenzone (14b) erfolgt, wobei die Steuereinheit (56) in der Navigationsbetriebsart ist und der Berührungsfeld-Signalgenerator (16) in der Anzeigeverschiebungsbetriebsart ist und die Steuereinheit (56) die Karte auf der Anzeigevorrichtung (54) kontinuierlich verschiebt, während das Anzeigeverschiebungssignal empfangen wird.

9. Steuerungsschalter für Fahrzeugführer nach Anspruch 8, wobei der Berührungsfeld-Signalgenerator (16) Handbewegungsbefehlssignale erzeugt, wenn die Berührungseingabe auf der ersten Innenzone (14a) erfolgt und die Steuereinheit (56) die Handbewegungssignale empfängt, wobei die Steuereinheit (56) die Karte auf der Anzeigevorrichtung (54) basierend auf den Handbewegungsbefehlssignalen neu konfiguriert.

10. Steuerungsschalter für Fahrzeugführer nach Anspruch 9, wobei die Handbewegungsbefehlssignale Zoom-Handbewegungsbefehlssignale umfassen.

11. Steuerungsschalter für Fahrzeugführer nach einem der Ansprüche 8 bis 10, wobei eine Richtung, entlang der die Karte verschoben wird, der Stelle der Berührungseingabe auf der zweiten Außenzone (14b) entspricht.

12. Schaltsteuerungsverfahren für Fahrzeugführer, das aufweist:
Bereitstellen eines integrierten Berührungsfelds (12) mit einer Berührungsoberfläche (14);
Erzeugen von Anzeigeverschiebungsbefehlssignalen, wenn die Berührungseingabe auf der zweiten Außenzone (14b) des Berührungsfelds (12) empfangen wird;
Empfangen der Anzeigeverschiebungsbefehlssignale von dem Berührungsfeld (12);
Anzeigen von Anzeigeinhalt auf einer Anzeigevorrichtung (54); und
Verschieben des Anzeigeinhalts auf der Anzeigevorrichtung (54), wenn die Anzeigeverschiebungsbefehlssignale empfangen werden,
und Bereitstellen eines Drehknopfs (20) um das Berührungsfeld (12) herum, der relativ dazu drehbar beweglich ist; und
Bereitstellen eines Drehsignalgenerators (22), der auf oder benachbart zu dem Drehknopf (20) angeordnet ist;
Erfassen der relativen Drehung des Drehknopfs (20) und Erzeugen dementsprechender Drehsignale,
**dadurch gekennzeichnet, dass**
die Berührungsoberfläche (14) eine erste zentrale Zone (14a) und eine zweite Zone (14b), die die erste zentrale Zone (14a) ringförmig umgibt, hat, wobei die erste Zone (14a) einen kreisförmigen Aufbau hat und die zweite Zone (14b) einen ringförmigen Aufbau, der die erste Zone (14a) umgibt, hat;
und der Berührungsfeld-Signalgenerator (16) kontinuierlich Anzeigeverschiebungsbefehlssignale ausgibt, die der Berührungseingabe entsprechen, wenn eine Stelle der zweiten Außenzone (14b) kontinuierlich berührt wird.

## Revendications

1. Commutateur de contrôle de commande de véhicule comprenant un pavé tactile (12) ayant une surface tactile (14) pour recevoir des entrées tactiles sur celle-ci, ladite surface tactile (14) ayant une première zone intérieure (14a) et une deuxième zone extérieure (14b) disposée vers l'extérieur par rapport à ladite première zone intérieure (14a) ; et
un générateur de signal de pavé tactile (16) pour détecter l'emplacement de ladite entrée tactile sur ladite surface tactile (14) et générer des signaux correspondant à celui-ci, ledit générateur de signal de pavé tactile (16) ayant un mode de défilement, et un bouton rotatif (20) est disposé autour dudit pavé tactile (12) et mobile de manière rotative par rapport à celui-ci ; et un générateur de signal de rotation (22) disposé sur ou adjacent audit bouton rotatif (20) pour détecter une rotation relative dudit bouton rotatif (20) et générer des signaux de rotation correspondant à celle-ci,
**caractérisé en ce que**
ledit générateur de signal de pavé tactile (16) génère un signal de commande de défilement quand ladite entrée tactile est sur ladite deuxième zone extérieure (14b) qui correspond à un emplacement de ladite entrée tactile sur ladite deuxième zone extérieure (14b), et ladite première zone (14a) a une configuration circulaire et ladite deuxième zone (14b) a une configuration annulaire qui entoure ladite première zone (14a) ;
dans lequel, quand ledit emplacement de la deuxième zone extérieure (14b) est touché de manière continue, le générateur de signal de pavé tactile (16) génère de manière continue des signaux de commande de défilement correspondant à l'entrée tactile.

2. Commutateur de contrôle de commande de véhicule selon la revendication 1, dans lequel ladite surface tactile (14) est une surface continue à travers et entre lesdites première et deuxième zones (14a, 14b).

3. Commutateur de contrôle de commande de véhicule selon la revendication 1 ou 2, dans lequel ladite surface tactile (14) est ronde et convexe.

4. Commutateur de contrôle de commande de véhicule selon l'une quelconque des revendications 1 à 3, dans lequel lesdites première et deuxième zones (14a, 14b) sont distinguées l'une de l'autre en ayant au moins une parmi : des couleurs différentes, des textures différentes et un rétro-éclairage différent.

5. Commutateur de contrôle de commande de véhicule selon l'une quelconque des revendications 1 à 4, dans lequel ledit générateur de signal de pavé tactile (16) génère de manière continue ledit signal de commande de défilement alors que ladite entrée tactile est sur ladite deuxième zone extérieure (14b).

6. Commutateur de contrôle de commande de véhicule selon l'une quelconque des revendications 1 à 5, comprenant en outre une structure de support de véhicule (26) sur ou dans laquelle ledit pavé tactile (12) est monté, ledit pavé tactile (12) étant déplaçable par rapport à ladite structure de support (26) entre une première position et une deuxième position enfoncée ;
un mécanisme de sollicitation (28) connecté à ladite structure de support pour pousser ledit pavé tactile (12) vers ladite première position ; et
un générateur de signal de mouvement de pavé tactile (36) pour détecter un enfoncement dudit pavé tactile (12) quand ledit pavé tactile (12) est déplacé vers ladite deuxième position et générer un signal d'enfoncement correspondant à celui-ci.

7. Commutateur de contrôle de commande de véhicule selon l'une quelconque des revendications 1 à 6, comprenant en outre un rétro-éclairage (40) pour illuminer ledit pavé tactile (12), ledit rétro-éclairage (40) comprenant une pluralité de couleurs avec chacune de ladite pluralité de couleurs correspondant à un d'une pluralité de modes de système dudit pavé tactile (12) de manière que ledit pavé tactile (12) soit illuminé avec une couleur particulière qui correspond à un mode de système particulier dudit pavé tactile.

8. Commutateur de contrôle de commande de véhicule selon l'une quelconque des revendications 1 à 7, comprenant en outre une unité de commande (56) connectée fonctionnellement audit générateur de signal tactile (16) pour recevoir lesdits signaux de celui-ci, ladite unité de commande (56) ayant un mode de navigation dans lequel ladite entrée tactile à partir dudit pavé tactile (12) fait fonctionner un système de navigation de véhicule, ledit générateur de signal de pavé tactile (16) étant dans ledit mode de défilement quand ladite unité de commande (56) est dans ledit mode de navigation ; et
un dispositif d'affichage (54) connecté fonctionnellement à ladite unité de commande (56), ledit dispositif d'affichage (54) affichant une carte quand ladite unité de commande (56) est dans ledit mode de navigation,
dans lequel ledit signal de commande de défilement est généré par ledit générateur de signal de pavé tactile (16) quand ladite entrée tactile est sur ladite deuxième zone extérieure (14b) avec ladite unité de commande (56) dans ledit mode de navigation et ledit générateur de signal de pavé tactile (16) dans ledit mode de défilement et ladite unité de commande (56) faisant défiler ladite carte sur ledit dispositif d'affichage (54) de manière continue alors que ledit signal de commande de défilement est reçu.

9. Commutateur de contrôle de commande de véhicule selon la revendication 8, dans lequel ledit générateur de signal de pavé tactile (16) génère des signaux de commande de geste quand ladite entrée tactile est sur ladite première zone intérieure (14a) et ladite unité de commande (56) reçoit lesdits signaux de commande de geste, ladite unité de commande (56) reconfigurant ladite carte sur ledit dispositif d'affichage (54) en fonction desdits signaux de commande de geste.

10. Commutateur de contrôle de commande de véhicule selon la revendication 9, dans lequel lesdits signaux de commande de geste comprennent des signaux de commande de geste de zoom.

11. Commutateur de contrôle de commande de véhicule selon l'une quelconque des revendications 8 à 10., dans lequel une direction le long de laquelle ladite carte défile correspond audit emplacement de ladite entrée tactile sur ladite deuxième zone extérieure (14b).

12. Procédé de commutateur de contrôle de commande comprenant :
la fourniture d'un pavé tactile (12) ayant une surface tactile (14) ;
la génération de signaux de commande de défilement quand une entrée tactile est reçue sur ladite deuxième zone (14b) dudit pavé tactile (12) ;
la réception desdits signaux de commande de défilement en provenance dudit pavé tactile (12) ;
l'affichage d'un contenu d'affichage sur un dispositif d'affichage (54) ; et
le défilement dudit contenu d'affichage sur ledit dispositif d'affichage (54) quand lesdits signaux de commande de défilement sont reçus,
et la fourniture d'un bouton rotatif (20) autour dudit pavé tactile (12) qui est mobile de manière rotative par rapport à celui-ci ; et
la fourniture d'un générateur de signal de rotation (22) qui est disposé sur ou adjacent audit bouton rotatif (20) ; la détection d'une rotation relative dudit bouton rotatif (20) et la génération de signaux de rotation correspondant à celle-ci,
**caractérisé en ce que**
ladite surface tactile (14) a une première zone centrale (14a) et une deuxième zone (14b) entourant de manière annulaire la première zone centrale (14a), dans lequel ladite première zone (14a) a une configuration circulaire et ladite deuxième zone (14b) a une configuration annulaire qui entoure ladite première zone (14a) ;
et, quand un emplacement de ladite deuxième zone extérieure (14b) est touché de manière continue, le générateur de signal de pavé tactile (16) génère de manière continue des signaux de commande de défilement correspondant à l'entrée tactile.
